# EUROPEAN PATENT APPLICATION

(11) **EP 4 438 893 A1**
(43) Date of publication of application: **02.10.2024**
(21) Application number: 23196949.4
(22) Date of filing: 12.09.2023
(51) Int. Cl.: F03D 13/40

(54) **BLADE CRADLE AND HANDLING SYSTEM**

(30) Priority: 27.03.2023 EP 23164355
(71) Applicant: Siemens Gamesa Renewable Energy A/S, 7330 Brande (DK)
(72) Inventor: The designation of the inventor has not yet been filed
(74) Representative: SGRE-Association

(57) **Abstract**

Blade cradle (10) for a wind turbine blade (11) comprising a primary support frame (12) for receiving at least a section of the wind turbine blade (11) and at least one secondary support frame (13) for receiving at least one fixation means (14) for fixing the wind turbine blade (11) to the blade cradle (10), wherein the primary support frame (12) extends between a leading-edge end (15) and a trailing-edge end (16), wherein the primary support frame (12) comprises at least one first type connection interface (17) at the leading-edge end (15) and/or the trailing-edge end, wherein via the first type connection interface (17), the secondary support frame (13) is reversibly connectable to the primary support frame (12) in an operating position (I).

## Description

The invention relates to a blade cradle for a wind turbine blade having the features of independent claim 1, a handling system for handling at least one wind turbine blade during transport having the features of independent claim 12, a transport vehicle having the features of independent claim 13, a method for operating a blade cradle having the features of independent claim 14 and a method for operating a handling system having the features of independent claim 16.

Wind turbine blades are large structural components which, due to their particularly lightweight construction, are susceptible to transport damage. Transport damage may for example occur when a wind turbine blade is transported from a manufacturing site to a site of operation, where the wind turbine blade is attached to a nacelle of the wind turbine.

To secure and structurally support wind turbine blades during handling, e.g., in the course of loading and/or unloading operations, they are placed on and/or connected to blade cradles. The blade cradles provide support for the wind turbine blades and serve as an interface for handling the blades, e.g., during loading and unloading operations.

Once the blade has been securely transported from a manufacturing site to an operating site and has been taken into operation, the blade cradles used in the course of transport can be brought back to the manufacturing site in order to be reused for further blades.

Blade cradles are commonly tailored to a specific wind turbine blade type having a specific length and airfoil profile. Therefore, as for different wind turbines, different types of blades may be used, different blade cradles need to be provided. This results in a correspondingly high level of work and material input as well as correspondingly high associated costs.

Also, the handling of known blade cradles sometimes requires a great deal of work and/or involves high transport costs due to an overall protruding structure and/or complex connections in the course of assembling and/or disassembling parts of a blade cradle.

The invention is therefore based on the task of at least partially eliminating at least one of the above-mentioned disadvantages. In particular, the invention is based on the task of providing a blade cradle and a handling system which enables at least partial adaptation of the blade cradle to different wind turbine blade types and/or simplifies handling of the blade cradle during operation, in particular during assembly and/or disassembly of the blade cradle and/or during transport of the blade cradle.

The task is solved by a blade cradle for a wind turbine blade comprising a primary support frame for receiving at least a section of the wind turbine blade, and by at least one secondary support frame for receiving at least one fixation means for fixing the wind turbine blade to the blade cradle, wherein the primary support frame extends between a leading-edge end and a trailing-edge end, wherein the primary support frame comprises at least one first type connection interface at the leading-edge end and/or the trailing-edge end, wherein via the first type connection interface the secondary support frame is reversibly connectable to the primary support frame in an operating position.

In other words, the blade cradle according to the present invention comprises at least one primary support frame and at least one secondary support frame. The primary support frame is designed to receive at least a section of a wind turbine blade in order to support said wind turbine blade e.g., during transport operations. Further, the blade cradle comprises at least one secondary support frame for receiving at least one fixation means for fixing the wind turbine blade to the blade cradle. The primary support frame extends between a leading-edge and a trailing-edge end and comprises at least one first type connection interface, which is located at the leading-edge end and/or trailing-edge end of the primary support frame, wherein via said first type connection interface, the secondary support frame is reversibly connectable to the primary support frame in an operating position, respectively operating state.

A blade cradle according to the present invention offers the advantage that at least one secondary support frame may be easily connected and/or disconnected to the primary support frame via the first type connection interface. On the one hand, this modular approach allows for a modular use of the different components of the blade cradle, such as the primary or secondary support frame, in order to adapt the blade cradle to different wind turbine blade types. On the other hand, disassembling at least one secondary support frame from the primary support frame allows for an improved handling of the blade cradle during transport operations, in particular when the blade cradle is brought back to a manufacturing site from an operating site. The reason for that is that the required space for transporting the blade cradle can be decreased by at least partially disassembling the blade cradle. Further, a blade cradle according to the present invention allows for a quick and easy connection between the primary support frame and the secondary support frame, which allows for a significant reduction of the amount of work involved in handling the blade cradle at a manufacturing and/or operating site. The modular approach further allows for using different secondary support frames with a single primary support frame or using different primary support frames with a single secondary support frame and thereby at least partially for adapting the blade cradle in dependence of current needs, e.g., with regard to the handling of different wind turbine blade types.

In the context of the present invention, it may be provided that the blade cradle comprises at least two or exactly two secondary support frames and/or that the primary support frame comprises at least one or exactly one first type connection interface at the leading-edge end and at least one or exactly one first type connection interface at the trailing-edge end. In other words, it may be provided that the blade cradle comprises a primary support frame for receiving at least a section of the wind turbine blade and at least two or exactly two secondary support frames for receiving at least one fixation means for fixing the wind turbine blade to the blade cradle, wherein the primary support frame extends between a leading-edge end and a trailing-edge end, wherein the primary support frame comprises at least one or exactly one first type connection interface at the leading-edge end and wherein the primary support frame comprises at least one or exactly one first type connection interface at the trailing-edge end, wherein via each of the first type connection interfaces, one of the at least two or two secondary support frames is reversibly connectable to the primary support frame in an operating position.

A leading-edge end of the primary support frame shall be understood as an end of the primary support frame and/or blade cradle which is oriented towards and/or located near the leading-edge of a wind turbine blade when said wind turbine blade is positioned on the blade cradle, in particular the primary support frame. A trailing-edge end of the primary support frame shall be understood as an end of the primary support frame which is oriented towards and/or located near the trailing-edge of a wind turbine blade when said wind turbine blade is positioned on the blade cradle, in particular the primary support frame. It may be provided that an axis extending between the leading-edge end and the trailing-edge end extends perpendicular or essentially perpendicular to a longitudinal axis of the wind turbine blade, when said wind turbine blade is positioned on the blade cradle, in particular on the primary support frame.

An operating position, respectively operating state shall be understood as a position and/or state of the secondary support frame and/or blade cradle, in which the blade cradle is ready for at least partially receiving a wind turbine blade and/or is ready to be at least partially fixed to the wind turbine blade. A transport position, respectively transport state shall be understood as a position and/or state of the secondary support frame and/or blade cradle, in which the blade cradle is ready for being transported, in particular being transported back to a manufacturing site. In particular the transport position respectively transport state refers to a position or state in which it is not intended that a wind turbine blade is at least partially received by the blade cradle and/or in which it is not intended that the cradle is at least partially fixed to the wind turbine blade.

A reversible connection shall be understood as a connection that can be established and released without damaging the related components. In other words, the components in question can be connected or separated more or less as often as desired without any or without any essential functional and/or structural deterioration of the components being expected.

A wind turbine blade according to the present invention may be a split wind turbine blade. The wind turbine blade may be split in at least two blade segments, one blade segment comprising the blade tip (tip segment) and the other segment comprising the blade root (root segment). The blade may be split in more than two segments and/or comprise one or more intermediate segments comprising a blade section between the tip segment and the root segment. In other words, when using a blade cradle, it may be provided that the blade cradle is used in connection with a blade segment rather that in connection with a whole blade.

At least one fixation means may for example be rope or a belt, in particular a tension belt. At least one fixation means may at least partially be made of a textile material. In particular, the material may be chosen such that when the fixation means comes at least partially into contact with the wind turbine blade, damage of the wind turbine blade due to friction between the blade and the fixation means is avoided.

With regard to the present invention, it may be provided that the primary support frame comprises at least one second type connection interface, preferably in a receiving section of the primary support frame, wherein via the second type connection interface, the secondary support frame is reversibly connectable to the primary support frame in a transport position. In other words, the primary support frame may comprise at least one second type connection interface in addition to at least one first type connection interface, wherein via the first type connection interface, a secondary support frame is reversibly connectable to the primary support frame in an operating position, and via the second type connection interface, the secondary support frame is connectable to the primary support frame in a transport position. Hereby, it can be achieved that during a transport of the blade cradle, e.g., from an operating site back to a manufacturing site, the secondary support frame may be secured to the primary support frame in a space saving way. This allows for an easier handling of the blade cradle during transport. For example, it may be provided that in the transport position, the secondary support frame is at least partially inserted into the primary support frame, preferably into a hollow section of the primary support frame.

The receiving section of the primary support frame shall be understood as a section where the wind turbine blade is at least partially received when said wind turbine blade is positioned on the blade cradle. In particular, the receiving section may be a section between the leading-edge end and the trailing-edge end of the primary support frame.

A connection between a primary support frame and at least one secondary support frame via a first type connection interface and/or second type connection interface may be designed such as that a relative movement between the primary support frame and the secondary support frame is prevented, particularly when and/or during the connection is/being fully established.

In the context of the present invention, it may be optionally provided that at least one connection interface, preferably at least one first type connection interface and/or at least one second type connection interface, comprises at least one or exactly one hooking pin, and at least one secondary support frame comprises at least one or exactly one hook-shaped portion, wherein the hook-shaped portion forms a receptacle, wherein the hooking pin is at least partially receivable in the receptacle for connecting the secondary support frame to the primary support frame in the operating position and/or transport position. The use of a hooking pin on the site of the primary support frame and a hook-shaped portion on the site of the secondary support frame allows for easily connecting or at least pre-connecting the secondary support frame to the primary support frame. By means of the at least partial form-fit between the hooking pin and the hooked-shaped portion, a reliable pre-fastening position of the secondary support frame can already be achieved, whereby, starting from this pre-fastening position, the final fastening position (operating position and/or transport position) of the secondary support frame can be reached easily and reliably.

It may be provided that at least one hooking pin at least partially protrudes from a sidewall of the primary support frame, wherein preferably, said sidewall at least partially predetermines or delimits a positioning of the secondary support frame relative to the primary support frame when connecting the secondary support frame to the primary support frame via the first type connection interface. Preferably, at least one hooking pin protrudes towards an inside of the primary support frame. Preferably, a positioning of the secondary support frame relative to the primary support frame when connecting the secondary support frame to the primary support frame via the first type connection interface, may at least partially be delimited or predetermined by at least two or exactly two sidewalls of the primary support frame. Incorrect positioning of the secondary support frame relative to the primary support frame thus can be effectively avoided. It may be provided that at least one hooking pin extends between said two sidewalls. A hooking pin continuously extending between the sidewalls of the primary support frame allows for a structural strengthening of the primary support frame in the area of the first type connection interface, for a better load distribution during operation of the blade cradle and for an easier positioning or pre-positioning of the secondary support frame to the primary support frame.

It may further be provided that at least one hooking pin is designed as an integral part of the primary support frame. Preferably, at least one hooking pin may be materially bonded to the primary support frame and/or form a monolithic component with the primary support frame. Hereby, the structural integrity of the blade cradle may be improved.

It may be provided that at least one hook-shaped portion is formed in a sidewall of a secondary support frame. In addition, or alternatively, it may be provided that at least one secondary support frame comprises at least one pair of hook-shaped portions, wherein the pair of hook-shaped portions comprises at least two or exactly two hook-shaped portions which are formed in opposite sidewalls of the secondary support frames, with each of the hook-shaped portions forming a receptacle. Preferably, the hook-shaped portions of a pair of hook-shaped portions are positioned at an identical or essentially identical position along a longitudinal extension of the secondary support frame. Thus, when connecting the secondary support frame to the primary support frame via a first and/or second type connection interface, the same hooking pin or at least related hooking pins defining the same operating position are at least partially introduced in the hook-shaped portions of the pair of hook-shaped portions. By using a pair of hook-shaped portions, a better load distribution between the primary and secondary support frames may be achieved during operation.

It may be provided that at least one secondary support frame comprises at least two pairs of hook-shaped portions, each of the hook-shaped portions forming a receptacle, wherein each of the hook-shaped portions allows for connecting said secondary support frame to the primary support frame in a specific operating position. In other words, multiple pairs of hook-shaped portions may be provided along the longitudinal extension of the secondary support frame, wherein each of the hook-shaped portions can be used to connect the secondary support frame to the primary support frame via a first-type connection interface and/or second-type connection interface. Providing a plurality of pairs of hook-shaped portions allows for a higher flexibility of the blade cradle as a secondary support frame may be connected to a primary support frame in multiple operating positions and/or transport positions. Hereby, the blade cradle may at least partially be adapted for the use with different wind turbine blade types.

With regard to the present invention, it is conceivable that at least one secondary support frame is pivotably connectable to the primary support frame by at least partially receiving at least one hooking pin in at least one hook-shaped portion, preferably the receptacle formed by said hook-shaped portion, wherein preferably, the pivoting axis is formed by the center axis of the hooking pin. It may be provided that at least one hooking pin at least partially has a circular cross section and that at least one hook-shaped portion is at least partially designed complementary to said circular cross section, such that the secondary support frame may be hinged to the primary support frame by introducing the hooking pin into the hook-shaped portion. In this way, on the one hand, pre-positioning or at least partial pre-fastening of the secondary support frame on the primary support frame can be achieved, and on the other hand, the secondary support frame can subsequently be brought into its final fastening position (transport position or operating position) by simply pivoting the secondary support frame relative to the primary support frame around the hooking pin, which enables a quick and easy assembly (and disassembly) of the blade cradle.

Additionally or alternatively, it may be provided that at least one connection interface, preferably at least one first type connection interface and/or at least one second type connection interface, comprises at least one first type recess in the primary support frame, wherein at least one secondary support frame comprises at least one second type recess, wherein the first type recess and the second type recess can be brought at least partially into coverage and wherein the blade cradle comprises at least one locking means wherein the locking means is arrangeable to at least partially extend through the first type recess and the second type recess for connecting the secondary support frame to the primary support frame in the operating position and/or transport position. Preferably, said recesses may be used in connection with at least one hooking pin of the primary support frame and at least one hooked-shaped portion of the secondary support frame, such that a coverage between at least one first type recess and at least one second type recess may be achieved by pivoting the secondary support frame relative to the primary support frame, preferably when at least one hooking pin is introduced in the hook-shaped portion. In other words, the secondary support frame may be hinged to the primary support frame using at least one hooking pin and at least one hook-shaped portion. Subsequently, the secondary support frame may be pivoted such that at least one first type recess and at least one second type recess are at least partially into coverage. Subsequently, the secondary support frame may be secured in its final position (transport position or operating position) by at least partially introducing at least one locking means into the first type recess and the second type recess. This enables a quick and easy assembly (and disassembly) of the blade cradle.

At least one first type recess may be provided in a sidewall of the primary support frame, wherein preferably, said sidewall at least partially predetermines or delimits a positioning of the secondary support frame relative to the primary support frame when connecting the secondary support frame to the primary support frame via the first type connection interface. Additionally or alternatively, it may be provided that at least the second type recess is formed in a sidewall of a secondary support frame.

It may further be provided that at least one connection interface, preferably at least one first type connection interface and/or at least one second type connection interface, comprises at least one pair of first type recesses wherein the pair of first type recesses comprises at least two or exactly two first type recesses which are formed in opposite sidewalls of the primary support frame. Preferably, the first type recesses of a pair of first type recesses are positioned at an identical or essentially identical position along a longitudinal extension of the primary support frame. Additionally or alternatively, it may be provided that at least one secondary support frame comprises at least one pair of second type recesses wherein the pair of second type recesses comprises at least two or exactly two second type recesses which are formed in opposite sidewalls of the secondary support frame. Preferably, the second type recesses of a pair of second type recesses are positioned at an identical or essentially identical position along a longitudinal extension of the second support frame.

By using a pair of recesses to secure the secondary support frame to the primary support frame, a more reliable and secure connection may be achieved, and a better load distribution between the primary and secondary support frames may be achieved during operation.

In the course of the invention, it may further be advantageous when at least one connection interface, preferably at least one first type connection interface and/or at least one second type connection interface, comprises a plurality of first type recesses wherein the recesses are arranged along a circular path. Preferably, the rotational axis of the circular path is formed by the center axis of at least one hooking pin. In other words, the different recesses of the plurality of recesses may be located at different positions while each of the recesses has the same distance from the center axis of the hooking pin. This offers the advantage that, when a secondary support frame is hinged to said hooking pin, it may be pivoted around said hooking pin, and at least one second type recess of the secondary support frame may be brought at least partially into coverage with at least two or each of the plurality of first type recesses arranged along said circular path. This allows for connecting the secondary support frame to the primary support frame in different angles of inclination regarding a positioning of the secondary support frame relative to the primary support frame. This, again, allows to at least partially adapt the blade cradle to different wind turbine blade types and to increase the scope of application of said blade cradle. The plurality of first type recesses may be provided in a sidewall of the primary support frame. It may be provided that the corresponding pattern of first type recesses is repeated in at least one opposite sidewall of the primary support frame, such that each of the recesses of the plurality of recesses is part of a pair of recesses.

In the course of the invention, it may further be advantageous when at least one secondary support frame comprises a plurality of second type recesses, wherein the recesses are arranged along a circular path. Preferably, the rotational axis of the circular path is formed by the center axis of at least one hooking pin when the hooking pin is at least partially received in a hook-shaped portion of the secondary support frame, preferably when connecting the secondary support frame to the primary support frame. In other words, the different recesses of the plurality of recesses may be located at different positions while each of the recesses has the same distance from the center axis of the hooking pin when the hooking pin is at least partially received in a hook-shaped portion of the secondary support frame, preferably when connecting the secondary support frame to the primary support frame. This offers the advantage that, when a secondary support frame is hinged to said hooking pin, it may be pivoted around said hooking pin, and at least one first type recess of the primary support frame may be brought at least partially into coverage with at least two or each of the plurality of second type recesses arranged along said circular path. This allows for connecting the secondary support frame to the primary support frame in different angles of inclination regarding a positioning of the secondary support frame relative to the primary support frame. This, again, allows to at least partially adapt the blade cradle to different wind turbine blade types and to increase the scope of application of said blade cradle. The plurality of second type recesses may be provided in a sidewall of the secondary support frame. It may be provided that the corresponding pattern of second type recesses is repeated in at least one opposite sidewall of the secondary support frame, such that each of the recesses of the plurality of recesses is part of a pair of recesses.

Additionally or alternatively, it may be provided that at least one locking means is a safety pin comprising at least one securing recess (split pin hole) as well as at least one split pin, wherein the split pin is at least partially insertable into the securing recess to secure the safety pin in its position. Hereby, a secure positioning of the locking means can be ensured, and therefore, a secure and reliable connection between the primary support frame and the secondary support frame may be achieved.

Further, it may be provided that at least one locking means may comprise a screw and/or a nut. In other words, the screw may be introduced into at least one first type and/or second type recess and may be secured with the nut. However, in the course of the present invention, it has shown to be advantageous to use safety pins as locking means, as they allow for a quick and easy assembly and disassembly of the blade cradle.

It may be provided with regard to the present invention that at least one locking means may at least partially be secured to the primary support frame, preferably by a securing means such as a chain or a rope. Hereby, a loss of said locking means may be avoided.

It is further conceivable with regard to the present invention that at least one connection interface, preferably at least one first type connection interface and/or at least one second type connection interface, comprises at least one projection, wherein said projection is arranged in proximity to at least one first type recess such that when a safety pin is at least partially arranged in said recess, the safety pin is securable in its position by at least partially inserting the split pin into the securing recess through the projection. A common application for a safety pin is to insert the safety pin into a recess and insert a split pin in a securing recess on a side of the recess which is opposite to the side from which the safety pin was inserted into the recess. However, for this, the recess must be accessible from both sides. This, however, is not always the case. To still ensure a safe fit of the safety pin in the recess, it may be advantageous that in proximity of a first type recess, at least one projection is provided. The projection comprises at least one recess through which a split pin is at least partially insertable into a securing recess of a safety pin. The projection may extend from the primary support frame in the direction from which the safety pin is at least partially inserted into the first type recess. Therefore, the safety pin may be secured without the need of the first type recess being accessible from more than one side. At least one projection may be provided on a sidewall of the primary support frame. The term "in proximity" is to be understood in a way that the described function of inserting a split pin into a securing recess of the safety pin through a recess in the projection may be successfully provided. The required distance may vary dependent on the length of the split pin used. However, it is recommended to keep the distance between the projection and the recess small in order to provide an easier handling. A distance of e.g., less than 1 cm or less than 5 mm has shown to be advantageous. At least one projection may at least partially surround at least one first type recess.

It may be further provided in the context of the present invention that the blade cradle, preferably the primary support frame and/or at least one secondary support frame, comprises at least one resting pad, wherein the resting pad forms a resting surface for the wind turbine blade, wherein preferably at least one resting pad is at least partially made of an at least partially deformable material. In other words, the resting pad provides a local point of support for the wind turbine blade to enable the blade to rest securely and reliably on the cradle during transport operations. The use of an at least partially deformable material allows better absorption of shocks and the like, so that even during handling of the blade cradle with the wind turbine blade attached to it, damages to the sensible surface of the wind turbine blade can be prevented. The at least partially deformable material may be a plastic, and/or a rubber, in particular a synthetic rubber such as ethylene-propylene-diene rubber.

It is conceivable in the scope of the present invention that at least one resting pad is movably mounted on the primary support frame such that the resting pad is at least partially pivotable relative to the primary support frame. This offers the advantage that the resting pad or resting pads may be adapted with regard to their orientation, which allows to at least partially adapt the blade cradle to different wind turbine blade types.

It may be advantageous with regard to the present invention when at least one secondary support frame comprises at least one means for tensioning at least one fixation means for fixing the wind turbine blade to the blade cradle. In other words, by a means for tensioning, at least one fixation means can be tensioned and thus, a reliable fixation of the wind turbine blade to the blade cradle may be achieved in an easy and reliable way. At least one means for tensioning may be provided as a belt tensioner or a chain tensioner.

Alternatively or additionally, it may be provided that at least one secondary support frame comprises a guiding element for at least partially guiding at least one fixation means for fixing the wind turbine blade to the blade cradle, wherein preferably the guiding element comprises at least one separating element in order to separate an area for a first fixation means on the guiding element from an area for a second fixing means on the guiding element. This offers the advantage that the fixation means are guided along the desired path and reliably held in the desired position. In particular, an overlap of different fixation means can be effectively avoided.

It may further be proved that at least one secondary support frame comprises at least one lifting interface for lifting the blade cradle, preferably by a crane. At least one lifting interface may comprise at least one recess in which a hook, preferably from a crane, may at least partially be inserted. The lifting interface may be positioned such that an advantageous load distribution in the blade cradle is achieved when the blade cradle is lifted.

The primary support frame may at least partially be extendable in its length with regard to a distance between the leading-edge end and the trailing-edge end. This allows for at least partially adapting the primary support frame to different wind turbine blade types. In this context, it may be provided that the primary support frame comprises at least two primary support frame elements, wherein a first primary support frame element comprises the leading-edge end and a second primary support frame element comprises the trailing-edge end. Further, it may be provided that an adaption mechanism is comprised, wherein by said adaption mechanism, the first primary support frame element and the second primary support frame element may be fixed to each other in at least two different positions, wherein in said two different positions, each position is representing a different distance between the leading-edge end and the trailing-edge end. The mechanism can, for example, comprise elongated holes in the primary support frame elements which can be arranged at least partially in overlap and which allow the elements to be displaced relative to one another. The fixation may be performed by means of at least one fastening means, e.g., a screw and/or a nut.

The above mentioned task is also solved by a handling system for handling at least one wind turbine blade during a transport, comprising at least one first type blade cradle, wherein the first type blade cradle is a blade cradle according to the invention, preferably according to any of claims 1 - 11, wherein the handling system comprises at least one second type blade cradle, wherein the second type blade cradle comprises a primary support frame for receiving at least a section of the wind turbine blade, wherein the primary support frame of the second type blade cradle comprises at least one second type connection interface, preferably in a receiving section of the primary support frame, wherein via the second type connection interface, a secondary support frame of the first type blade cradle is reversibly connectable to the primary support frame of the second type blade cradle in a transport position.

In other words, the second type blade cradle may be a blade cradle which comprises a primary support element, preferably, however, no secondary support elements. The reason for that may be that different blade cradles may be used for different sections of the wind turbine blade. For example, in the middle of a wind turbine, the span of the blade perpendicular to its longitudinal axis is large compared to its tip or root. Therefore, especially in this region, blade cradles with a primary support element and one or more secondary support elements may be used. In other blade region such as the tip or the root, smaller blade cradles may be used due to a decreasing span of the blade perpendicular to its longitudinal axis. However, the second type blade cradle may alternatively be a blade cradle according to the present invention, in particular according to any of claims 1 - 11.

In general, the features described with regard to a blade cradle may apply to a first type blade cradle and/or second type blade cradle.

Often, all segments of a blade are transported simultaneously. Therefore, the different blade cradles used for transporting said blade need to be transported back to the manufacturing site after assembling the blade at the operating site and attaching it to the nacelle. The handling system according to the present invention allows for an easy handling and packaging of said blade cradles and therefore for an efficient and easy handling during transport operations. For example, the secondary support frame or secondary support frames of the first type blade cradle may be detached from the primary support frame of the first type blade cradle and connected to the primary support frame of the second type blade cradle in a transport position via at least one second type connection interface of the second type blade cradle. The second type blade cradle, preferably the primary support frame of the second type blade cradle, may then be positioned in the first type blade cradle, preferably on the primary support frame of the first type blade cradle, in order to build a compact and easy-to-handle transport unit. The blade cradles may then for example be loaded in a container for their transport to the manufacturing site.

It may be provided that the primary support frame of the first type blade cradle and primary support frame of the second type blade cradle comprise at least one fixation recess, wherein the fixation recesses of the first type blade cradle and the second type blade cradle can be brought at least partially into coverage when the primary support frame of the second type blade cradle is positioned on the primary support frame of the first type blade cradle, preferably to build a transport unit, such that at least one locking means may at least partially be introduced into the fixation recesses to secure the primary support frame of the second type blade cradle to the primary support frame of the first type blade cradle.

The above mentioned task is also solved by a transport vehicle wherein the transport vehicle carries at least one blade cradle according to the present invention, preferably according to any of claims 1 - 11, preferably in a loading area of said transport vehicle. The transport vehicle may preferably be a vessel. However, the transport vehicle can also be designed as a truck, a forklift truck, a train or an airplane.

The above mentioned task is also solved by a method for operating a blade cradle according to the present invention, preferably according to any of claims 1 - 11, comprising at least the following:
- Connecting a secondary support frame to a leading-edge end of the primary support frame in an operating position via a first type connection interface and/or connecting a secondary support frame to a trailing-edge end of the primary support frame in an operating position via a first type connection interface.

The method offers the same advantages as they have already been described with regard to a blade cradle according to the present invention.

In the context of the present invention, it may be further provided that least one of the following is comprised by the method:
- Placing at least a section of a wind turbine blade on the blade cradle, such that the wind turbine blade is at least partially received by the primary support frame,
- fixing the wind turbine blade to the blade cradle by means of at least one fixation means, wherein the fixation means is at least partially received by at least one secondary support frame,
- loading the blade cradle and the wind turbine blade on a transport vehicle and/or unloading the blade cradle and the wind turbine blade from a transport vehicle, preferably comprising at least temporarily lifting the blade cradle, particularly with a crane or forklift truck,
- releasing at least one fixation means,
- removing the wind turbine blade from the blade cradle,
- disconnecting a secondary support frame from the leading-edge end of the primary support frame and/or disconnecting a secondary support frame from a trailing-edge end of the primary support frame,
- Connecting at least one secondary support frame to the primary support frame in a transport position via a second type connection interface.

The above mentioned task is also solved by a method for operating a handling system according to the present invention, preferably according to any of claims 12 - 13, comprising at least the following:
- Connecting at least one secondary support frame of a first type blade cradle to the primary support frame of a second type blade cradle in a transport position via a second type connection interface of said second type blade cradle,
- stacking the primary support frames of at least two blade cradles, preferably of the first type blade cradle and the second type blade cradle, to form a transport unit,
- loading the transport unit into a container and/or unloading the transport unit from a container, preferably by a crane or forklift truck,
- loading the transport unit and/or container on a transport vehicle and/or unloading the transport unit and/or container from a transport vehicle,
- dismantling at least one transport unit by unstacking at least two primary support frames of at least two blade cradles, preferably of the first type blade cradle and the second type blade cradle.

The method offers the same advantages as have already been described with regard to the blade cradle and/or the handling system.

Further advantages, features and details of the invention will be apparent from the following description, in which several embodiments of the invention are described in detail with reference to the drawings. In this connection, the features mentioned in the claims and in the description may each be essential to the invention individually or in any combination.

Thereby, the invention is shown in the following figures:
- Fig. 1: shows a schematic view of a blade cradle,
- Fig. 2: shows a schematic view of a blade cradle,
- Fig. 3: shows a schematic view of a blade cradle,
- Fig. 4: shows a schematic view of a blade cradle,
- Fig. 5: shows a schematic view of a blade cradle
- Fig. 6: shows a schematic view of a blade cradle
- Fig. 7: shows a schematic view of a handling system,
- Fig. 8: shows a schematic view of a transport vehicle,
- Fig. 9: shows a schematic view of a method and
- Fig. 10: shows a schematic view of a method.

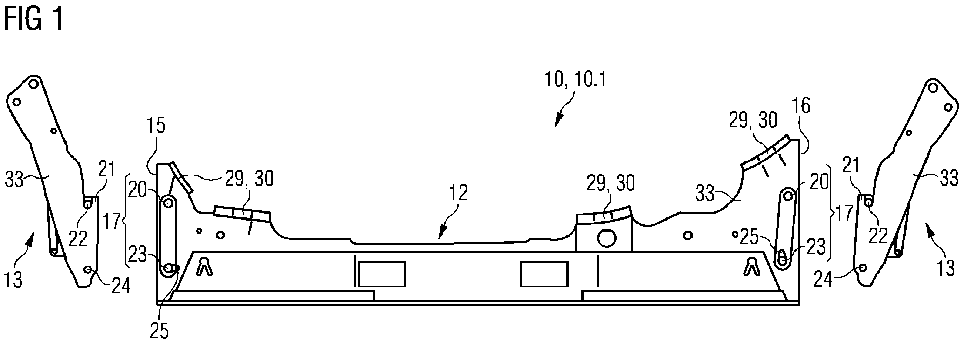

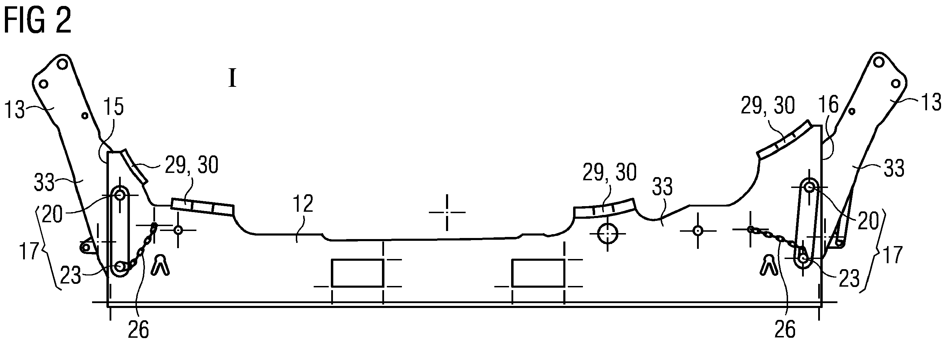

Fig. 1 and fig. 2 show a schematic view of a blade cradle 10 for a wind turbine blade 11. The blade cradle 10 comprises a primary support frame 12 for receiving at least a section of the wind turbine blade 11. Further, the blade cradle 10 comprises two secondary support frames 13, each of the secondary support frames being for receiving at least one fixation means 14 for fixing the wind turbine blade 11 to the blade cradle 10. The primary support frame extends between a leading-edge end 15 and a trailing-edge end 16 wherein at the leading-edge end 15 and at the trailing-edge end 16, the blade cradle 10 comprises a first type connection interface 17, wherein via said first type connection interfaces 17, the secondary support frames 13 are reversibly connectable to the primary support frame 12 in an operating position I.

Fig. 1 shows the blade cradle 10 in a state where the secondary support frames 13 are detached from the primary support frame 12. Fig. 2 shows the blade cradle 10 in a state where the secondary support frames 13 are connected to the primary support frame 12 in an operating position I.

A blade cradle 10 according to the present invention offers the advantage that the secondary support frames 13 may be easily connected and/or disconnected to the primary support frame 12 via the first type connection interface 17. On the one hand, this modular approach allows for a modular use of the different components of the blade cradle 10, such as the primary support frame 12 or secondary support frame 13, in order to adapt the blade cradle 10 to different wind turbine blade types.

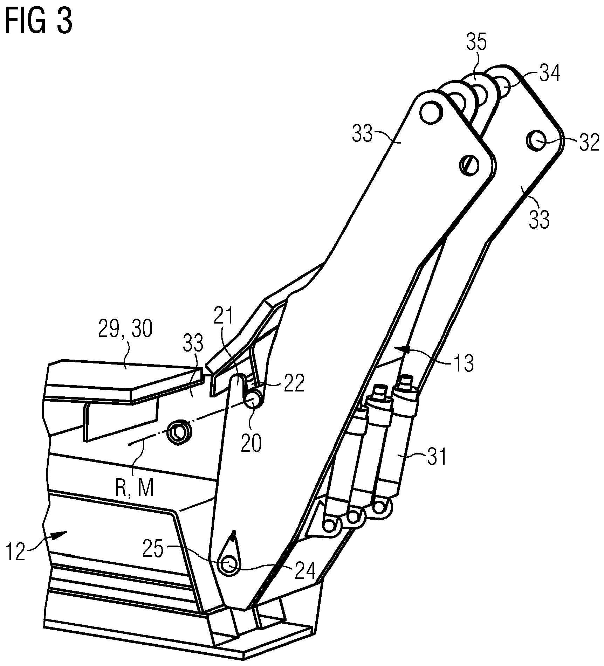

Fig. 3 shows a schematic view of a blade cradle 10 in order to emphasize the connection between a secondary support frame 13 and the primary support frame 12 via a first type connection interface 17. Therefore, fig. 3 shows the blade cradle 10 in a state where the secondary support frame 13 is connected to the primary support frame 12. The primary support frame 12 is shown in a sectional view for a better overview.

According to fig. 3, the first type connection interface 17 of the primary support frame 12 comprises a hooking pin 20, and the secondary support frame 13 comprises a hook-shaped portion 21, which forms a receptacle 22 in which the hooking pin 20 is at least partially receivable.

The hooking pin 20 continuously extends between two sidewalls 33 of the primary support frame 12 which at least partially delimit or predetermine a positioning of the secondary support frame 13 relative to the primary support frame 12 when connecting the secondary support frame 13 to the primary support frame 12 via the first type connection interface 17. The hook-shaped portion 21 is formed in a sidewall 33 of the secondary support frame.

By receiving the hooking pin 20 at least partially in the hook-shaped portion 21, the secondary support frame 13 is pivotably connectable to the primary support frame 12 wherein preferably, the pivoting axis R is formed by the center axis M of the hooking pin 20. In this way, on the one hand, pre-positioning or at least partial pre-fastening of the secondary support frame 13 on the primary support frame 12 can be achieved, and on the other hand, the secondary support frame 13 can subsequently be brought into its final fastening position by simply pivoting the secondary support frame 13 relative to the primary support frame 12 around the hooking pin 20, which enables a quick and easy assembly (and disassembly) of the blade cradle 10.

Further, the first type connection interface 17 comprises at least one first type recess 23, and the secondary support frame 13 comprises at least one second type recess 24, wherein the first type recess 23 and the second type recess 24 can be brought at least partially into coverage, and wherein the blade cradle 10 comprises at least one locking means 25 wherein the locking means 25 is arrangeable to at least partially extend through the first type recess 23 and the second type recess 24 for connecting the secondary support frame 13 to the primary support frame 12.

The locking means 25 is designed as a safety pin comprising at least one securing recess (not explicitly shown) as well as at least one split pin (not explicitly shown) wherein the split pin is at least partially insertable into the securing recess to secure the safety pin in its position. It can further be seen from fig. 1 or 2 that at least one locking means 25 is secured to the primary support frame by a securing means 26, which is designed as a chain.

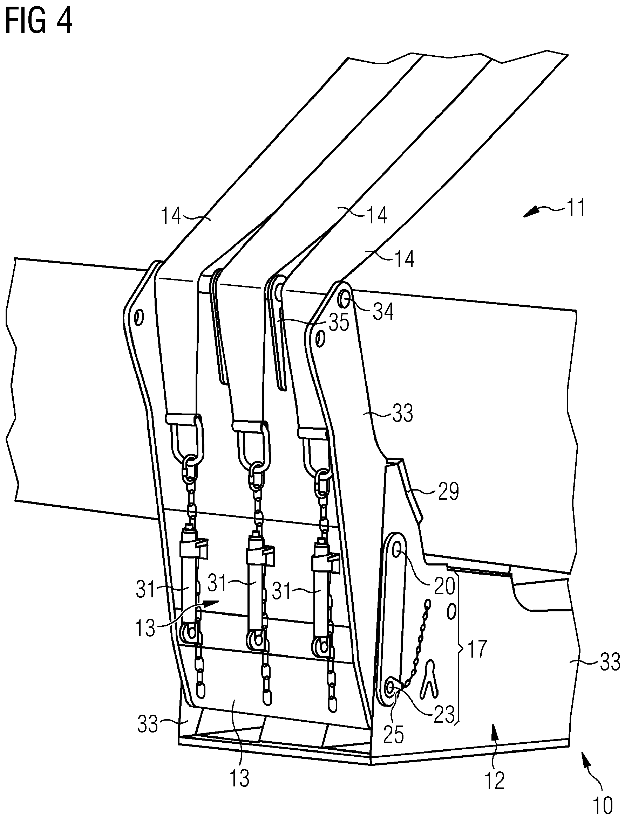

It is clear from fig. 3 that the hook-shaped portion 21 and the second type recess 24 in the sidewall 33 of the secondary support frame 13 facing the viewer are also formed in the sidewall 33 of the secondary support frame 13 facing away from the viewer and thus, respectively, a pair of second type recesses 24 and a pair of hook-shaped portions 21 is formed in the sidewalls 33 of the secondary support frame 13. This also relates to the first type recess 23 of the primary support frame 12 which is formed in both sidewalls 33 of the primary support frame 12, forming a pair of first type recesses 23 (see e.g., figs. 1 and 4).

Figs. 1 - 4 further show that the primary support frame comprises at least one resting pad 29, wherein the resting pad 29 forms a resting surface 30 for the wind turbine blade 11. At least one resting pad 29 is at least partially made of an at least partially deformable material. In other words, the resting pad 29 provides a local point of support for the wind turbine blade 11 to enable the blade to rest securely and reliably on the blade cradle 10 during transport operations.

Figs. 3 and 4 further show that at least one secondary support frame 13 comprises at least one means for tensioning 31 at least one fixation means 14, for fixing the wind turbine blade 11 to the blade cradle 10. In other words, by a means for tensioning 31, at least one fixation means 14 can be tensioned and thus, a reliable fixation of the wind turbine blade 11 to the blade cradle 10 may be achieved in an easy and reliable way.

Figs. 3 and 4 also show that at least one secondary support 13 frame comprises a guiding element 34 for at least partially guiding at least one fixation means 14 for fixing the wind turbine blade 11 to the blade cradle 10, wherein preferably, the guiding element 34 comprises at least one separating element 35 in order to separate an area for a first fixation means 14 on the guiding element 34 from an area for a second fixing means 14 on the guiding element 34. This offers the advantage that the fixation means 14 are guided along the desired path and reliably held in the desired position. In particular, an overlap of different fixation means 14 can be effectively avoided.

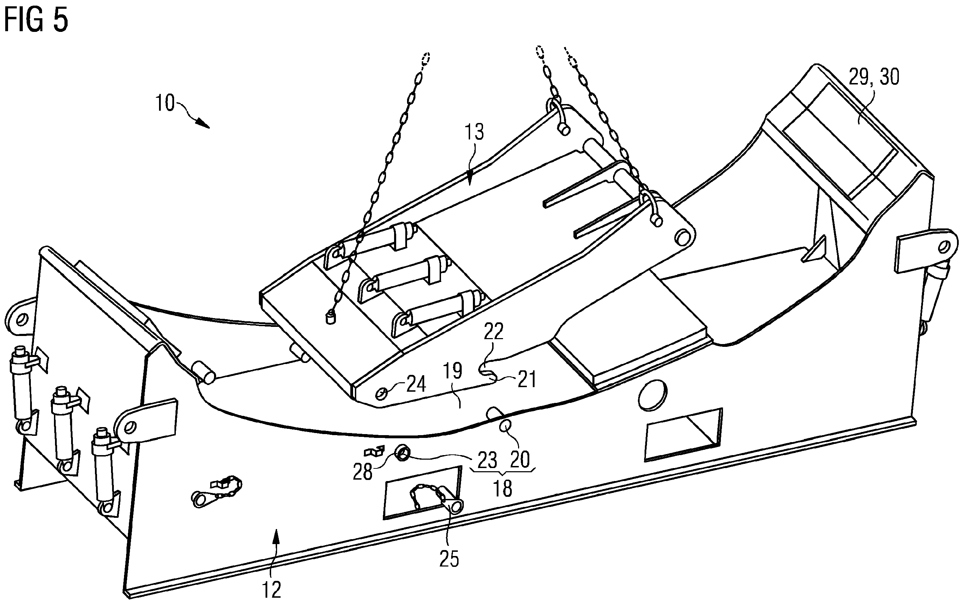

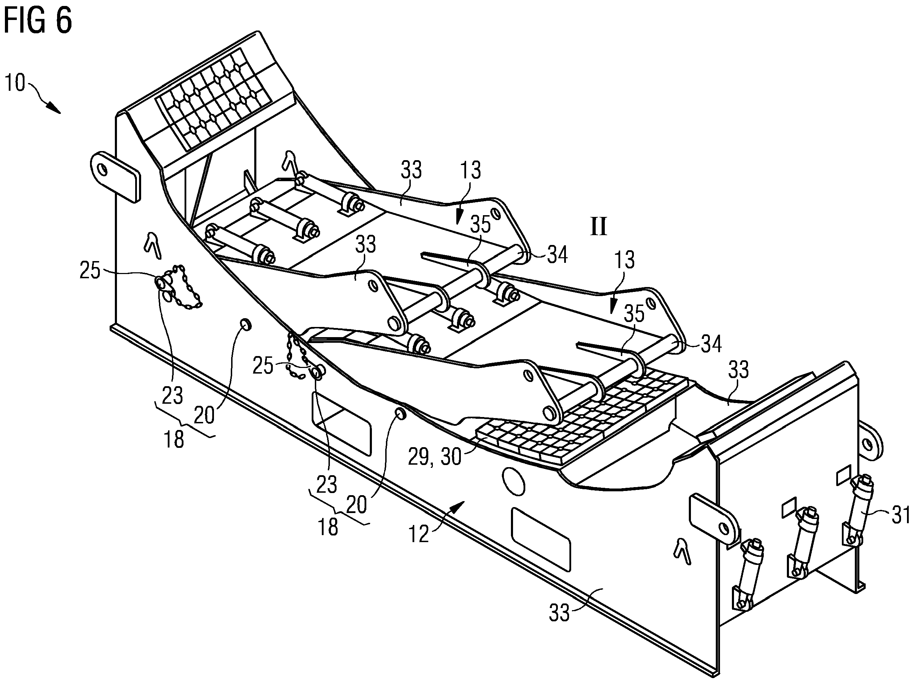

Figs. 5 and 6 show a blade cradle 10 with a primary support frame 12. The primary support frame 12 comprises at least one second type connection interface 18 in a receiving section 19 of the primary support frame 12. Via the second type connection interface 18, the secondary support frame 13 is reversibly connectable to the primary support frame 12 in a transport position II. The second type connection interface comprises essentially the same components as the first type connection interface, as explained with regard to figs. 1 - 3. However, as the components are oriented in a different way, the secondary support frame 13 can be connected to the primary support frame 12 in a transport position II.

The blade cradle 10 shown in figs. 5 and 6 is a second type blade cradle 10.2. The second type connection interface 18 may however also be provided by a first type blade cradle 10.1, as for example shown in figs. 1 - 4.

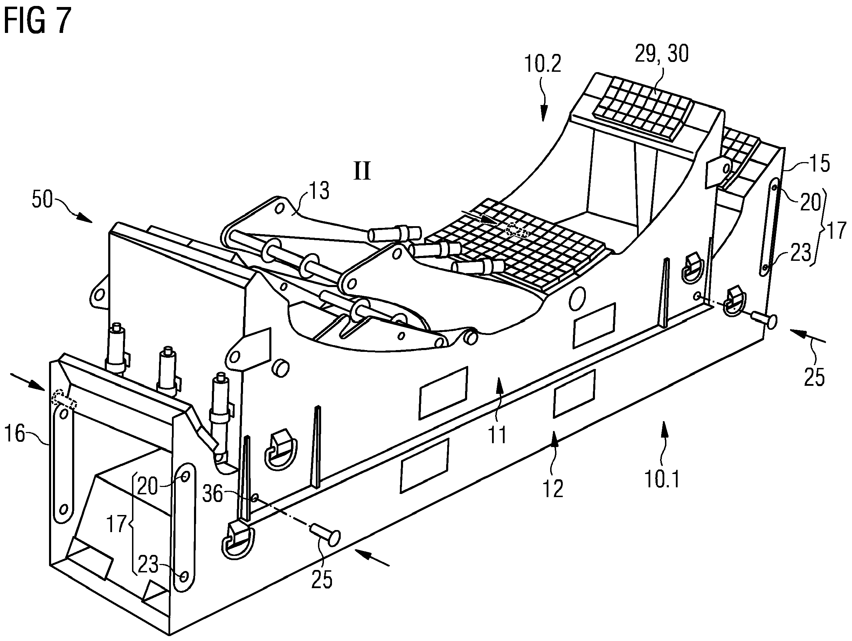

Fig. 7 shows a handling system 50 for handling at least one wind turbine blade 11 during a transport. The handling system 50 comprises a first type blade cradle 10.1 and a second type blade cradle 10.2.

It can be seen from fig. 7 that the secondary support frames 13 of the first type blade cradle 10.1 were detached from the first type blade cradle 10.1 and attached to the second type blade cradle 10.2 in a transport position II, as described with reference to figs. 5 and 6.

The second type blade cradle 10.2 is then positioned on the first type blade cradle 10.1 in order to build a compact transport unit.

Fig. 7 further shows that that the primary support frame 12 of the first type blade 10.1 cradle and primary support frame 12 of the second type blade cradle 10.2 comprise at least one fixation recess 36, wherein the fixation recesses 36 of the first type blade cradle 10.1 and the second type blade cradle 10.2 can be brought at least partially into coverage when the primary support frame 12 of the second type blade cradle 10.2 is positioned on the primary support frame 12 of the first type blade cradle, preferably to build a transport unit. This allows to at least partially introduce at least one locking means 25 into the fixation recesses 36 to secure the primary support frame 12 of the second type blade cradle 10.2 to the primary support frame 12 of the first type blade cradle 10.1.

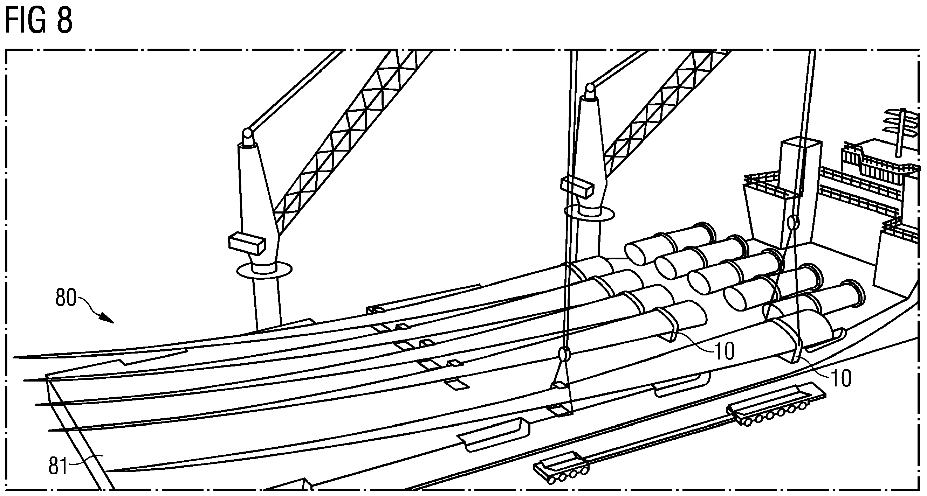

Fig. 8 shows a transport vehicle 80 wherein the transport vehicle 80 carries at least one blade cradle 10 according to the present invention in a loading area 81 of said transport vehicle 80. The transport vehicle is a vessel.

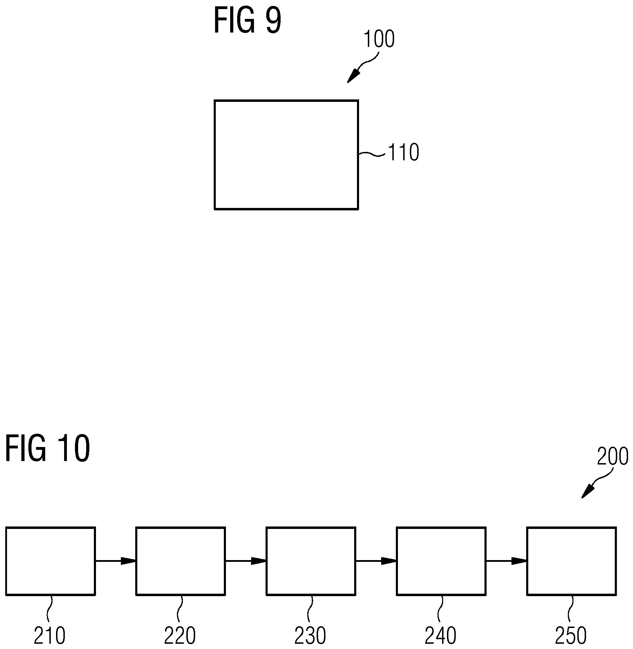

Fig. 9 shows a method 100 for operating a blade cradle 10, comprising at least the following:
- Connecting 110 a secondary support frame 13 to a leading-edge end 15 of the primary support frame 12 in an operating position I via a first type connection interface 17 and/or connecting a secondary support frame 13 to a trailing-edge end 16 of the primary support frame 12 in an operating position I via a first type connection interface 17.

Fig. 10 shows a method 200 for operating a handling system 50, comprising at least the following:
- Connecting 210 at least one secondary support frame 13 of a first type blade cradle 10.1 to the primary support frame 12 of a second type blade cradle 10.2 in a transport position II via a second type connection interface 18 of said second type blade cradle 10.2,
- stacking 220 the primary support frames 12 of at least two blade cradles 10 to form a transport unit,
- loading 230 the transport unit into a container, preferably a freight container, and/or unloading the transport unit from a container,
- loading 240 the transport unit and/or container on a transport vehicle 200 and/or unloading the transport unit and/or container from a transport vehicle 200,
- dismantling 250 at least one transport unit by unstacking at least two primary support frames 12 of at least two blade cradles 10.

## Claims

1. Blade cradle (10) for a wind turbine blade (11) comprising a primary support frame (12) for receiving at least a section of the wind turbine blade (11)
and at least one secondary support frame (13) for receiving at least one fixation means (14) for fixing the wind turbine blade (11) to the blade cradle (10),
wherein the primary support frame (12) extends between a leading-edge end (15) and a trailing-edge end (16),
wherein the primary support frame (12) comprises at least one first type connection interface (17) at the leading-edge end (15) and/or the trailing-edge end,
wherein via the first type connection interface (17), the secondary support frame (13) is reversibly connectable to the primary support frame (12) in an operating position (I).

2. Blade cradle (10) according to claim 1,
**characterized in that,**
the primary support frame (12) comprises at least one second type connection interface (18), preferably in a receiving section (19) of the primary support frame (12), wherein via the second type connection interface (18), the secondary support frame (13) is reversibly connectable to the primary support frame (12) in a transport position (II).

3. Blade cradle (10) according to any of the previous claims,
**characterized in that,**
at least one connection interface (17, 18) comprises at least one hooking pin (20), and at least one secondary support frame (13) comprises a hook-shaped portion (21), wherein the hook-shaped portion (21) forms a receptacle (22), wherein the hooking pin (20) is at least partially receivable in the receptacle (22) for connecting the secondary support frame (13) to the primary support frame (12) in the operating position (I) and/or transport position (II).

4. Blade cradle (10) according to claim 3,
**characterized in that,**
at least one secondary support frame (13) is pivotably connectable to the primary support frame (12) by at least partially receiving the hooking pin (20) in the receptacle (22), wherein preferably the pivoting axis (R) is formed by the center axis (M) of the hooking pin (20).

5. Blade cradle (10) according to any of the previous claims,
**characterized in that,**
at least one connection interface (17, 18) comprises at least one first type recess (23) in the primary support frame (12) and wherein at least one secondary support frame (13) comprises at least one second type recess (24), wherein the first type recess (23) and the second type recess (24) can be brought at least partially into coverage and wherein the blade cradle (10) comprises at least one locking means (25) wherein the locking means (25) is arrangeable to at least partially extend through the first type recess (23) and the second type recess (24) for connecting the secondary support frame (13) to the primary support frame (12) in the operating position (I) and/or transport position (II).

6. Blade cradle (10) according to claim 5,
**characterized in that,**
at least one connection interface (17, 18) comprises a plurality of first type recesses (23) and/or at least one secondary support frame (13) comprises a plurality of second type recesses (24), wherein the recesses are arranged along a circular path.

7. Blade cradle (10) according to any of claims 5 - 6,
**characterized in that,**
at least one locking means (25) is a safety pin comprising at least one securing recess as well as at least one split pin, wherein the split pin is at least partially insertable into the securing recess to secure the safety pin in its position.

8. Blade cradle (10) according to claim 7,
**characterized in that,**
at least one connection interface (17, 18) comprises at least one projection (28), wherein said projection (28) is arranged in proximity to at least one first type recess (23) such that when a safety pin is at least partially arranged in said recess, the safety pin is securable in its position by at least partially inserting the split pin into the securing recess through the projection (28).

9. Blade cradle (10) according to any of the previous claims,
**characterized in that,**
the blade cradle (10), preferably the primary support frame (12), comprises at least one resting pad (29), wherein the resting pad (29) forms a resting surface (30) for the wind turbine blade (11), wherein preferably at least one resting pad (29) is at least partially made of an at least partially deformable material.

10. Blade cradle (10) according to claim 9,
**characterized in that,**
at least one resting pad (29) is movably mounted on the primary support frame (12) such that the resting pad (29) is at least partially pivotable relative to the primary support frame (12).

11. Blade cradle (10) according any of the previous claims, **characterized in that,**
at least one secondary support frame (13) comprises at least one means for tensioning (31) at least one fixation means (14), for fixing the wind turbine blade (11) to the blade cradle (10), and/or that at least one secondary support frame (13) comprises at least one lifting interface (32) for lifting the blade cradle (10), preferably by a crane.

12. Handling system (50) for handling at least one wind turbine blade (11) during a transport, comprising at least one first type blade cradle (10.1), wherein the first type blade cradle (10.1) is a blade cradle (10) according to any of the previous claims, wherein the handling system comprises at least one second type blade cradle (10.2), wherein the second type blade cradle (10.2) comprises a primary support frame (12) for receiving at least a section of the wind turbine blade (11), wherein the primary support frame (12) of the second type blade cradle (10.2) comprises at least one second type connection interface (18), preferably in a receiving section (19) of the primary support frame (12), wherein via the second type connection interface (18), a secondary support frame (13) of the first type blade cradle (10.1) is reversibly connectable to the primary support frame (12) of the second type blade cradle (10.2) in a transport position (II).

13. Transport vehicle (80), wherein the transport vehicle (200) carries at least one blade cradle (10) according to any of claims 1 - 11, preferably in a loading area (81) of said transport vehicle (80).

14. Method (100) for operating a blade cradle (10) according to any of claims 1 - 11, comprising at least the following:
- Connecting (110) a secondary support frame (13) to a leading-edge end (15) of the primary support frame (12) in an operating position (I) via a first type connection interface (17) and/or connecting a secondary support frame (13) to a trailing-edge end (16) of the primary support frame (12) in an operating position (I) via a first type connection interface (17).

15. Method (100) according to claim 14,
**characterized in that,**
at least one of the following is comprised:
- Placing at least a section of a wind turbine blade on the blade cradle (10), such that the wind turbine blade (11) is at least partially received by the primary support frame (12),
- connecting the wind turbine blade (11) to the blade cradle (10) by means of at least one fixation means (14), wherein the fixation means (14) is at least partially received by at least one secondary support frame (13),
- loading the blade cradle (10) and the wind turbine blade (11) on a transport vehicle (200) and/or unloading the blade cradle (10) and the wind turbine blade (11) from a transport vehicle (200),
- releasing at least one fixation means (14),
- removing the wind turbine blade (11) from the blade cradle (10),
- disconnecting a secondary support frame (13) from a leading-edge end (15) of the primary support frame (12) and/or disconnecting a secondary support frame (13) from a trailing-edge end (16) of the primary support frame (12),
- connecting at least one secondary support frame (13) to the primary support frame (12) in a transport position (II) via a second type connection interface (18).

16. Method (200) for operating a handling system (50) according to claim 12, comprising at least the following:
- Connecting (210) at least one secondary support frame (13) of a first type blade cradle (10.1) to the primary support frame (12) of a second type blade cradle (10.2) in a transport position (II) via a second type connection interface (18) of said second type blade cradle (10.2),
- stacking (220) the primary support frames (12) of at least two blade cradles (10) to form a transport unit,
- loading (230) the transport unit into a container, preferably a freight container, and/or unloading the transport unit from a container,
- loading (240) the transport unit and/or container on a transport vehicle (200) and/or unloading the transport unit and/or container from a transport vehicle (200),
- dismantling (250) at least one transport unit by unstacking at least two primary support frames (12) of at least two blade cradles (10).
